(19) Europäisches Patentamt
European Patent Office
Office européen des brevets

(11) Veröffentlichungsnummer: **0 377 465 A2**

(12) **EUROPÄISCHE PATENTANMELDUNG**

(21) Anmeldenummer: **90100175.0**

(51) Int. Cl.$^5$: **A23G 1/00, A23G 1/04**

(22) Anmeldetag: **05.01.90**

(30) Priorität: **05.01.89 DE 3900194**

(43) Veröffentlichungstag der Anmeldung: **11.07.90 Patentblatt 90/28**

(84) Benannte Vertragsstaaten: **AT BE CH DE DK ES FR GB GR IT LI LU NL SE**

(71) Anmelder: **Jacobs Suchard AG**
**Seefeldquai 17**
**CH-8008 Zürich(CH)**

(72) Erfinder: **Vogt, Siegfried**
**Gaussstrasse 30**
**D-2804 Lilienthal(DE)**
Erfinder: **Gabriel-Jürgens, Hans-Otto**
**Hemelinger Rampe 51**
**D-2800 Bremen 44(DE)**
Erfinder: **Jäger, Karin**
**Schlossparkstrasse 55**
**D-2800 Bremen 44(DE)**

(74) Vertreter: **Bolte, Erich, Dipl.-Ing. et al**
**c/o Meissner & Bolte Patentanwälte**
**Hollerallee 73**
**D-2800 Bremen 1(DE)**

(54) **Trinkschokolade und Verfahren zum Herstellen derselben.**

(57) Die vorliegende Erfindung betrifft eine Trinkschokolade mit verbesserten Eigenschaften, welche aus Schokoladepulver, das sich aus schwach entöltem Kakaopulver, Saccharose, Dextrose, Lactose und Kochsalz zusammensetzt, und Milch unter Verwendung von Stabilisator hergestellt ist. Weiterhin betrifft sie ein Verfahren zur Herstellung von Trinkschokolade, insbesondere von erfindungsgemäßer Trinkschokolade, welches folgende Verfahrensschritte umfaßt:

a. Herstellung eines Gemisches aus Schokoladepulver, kalter Milch und Stabilisator;
b. Erhitzen des Gemisches;
c. Ultrahocherhitzen des Gemisches;
d. Homogenisieren des Gemisches bei 80° C; und
e. Abkühlen auf unter 18° C.

EP 0 377 465 A2

## Trinkschokolade und Verfahren zum Herstellen derselben

Die Erfindung bezieht sich auf Trinkschokolade unter Verwendung von Kakaopulver und Milch sowie auf ein Verfahren zum Herstellen derselben.

Es sind kakaohaltige Getränke bekannt, die vorwiegend als Kakaotrunk bezeichnet werden. Üblicherweise enthalten diese je Liter Milch bis zu 15 g Kakaopulver und 65 g Zucker. Auch ist es bekannt, dem Getränk einen Stabilisator zuzugeben, dessen Anteil jedoch 1,3 bis 1,8 Gew.-% - bezogen auf das Kakaopulver - nicht übersteigt.

Die bekannten kakaohaltigen Getränke haben den Nachteil, daß infolge Unterstabilisierung Kakaopartikel sich absetzen. Darüber hinaus ist eine mangelnde Cremigkeit festzustellen. Die Gründe hierfür liegen offenbar in dem zu geringen Anteil an Stabilisator sowie in der Zerstörung desselben durch Erhitzung.

Andererseits ist bei bekannten Getränken auch eine Überstabilisierung festzustellen, die zu Gerinnungssymptomen und zu erhöhter Viskosität führt.

Durch die Verwendung von fettarmem Kakao und/oder fettarmer Milch wird versucht, die genannten Nachteile zu vermindern. Die so hergestellten kakaohaltigen Getränke sind meist dünnflüssig, enthalten einen Bodensatz und müssen deshalb vor dem Verzehr geschüttelt werden. Auch geschmacklich sind diese Getränke unbefriedigend.

Der Erfindung liegt die Aufgabe zugrunde, ein kakaohaltiges Getränk zu schaffen, welches dem Anspruch gerecht wird, Trinkschokolade zu sein, nämlich geschmacklich hohen Ansprüchen gerecht zu werden ohne jedoch die oben dargestellten Nachteile aufzuweisen, insbesondere ohne Gefahr von Absetzungen von Kakaobestandteilen.

Zur Lösung dieser Aufgabe ist die erfindungsgemäße Trinkschokolade aus Schokoladepulver hergestellt, welches im wesentlichen schwach entöltes Kakaopulver, Saccharose, Dextrose, Lactose und Kochsalz enthält sowie aus Milch unter Verwendung von wenigstens einem Stabilisator.

Die erfindungsgemäße Trinkschokolade mit verbesserten organoleptischen Eigenschaften verwendet schwach entöltes Kakaopulver, welches von Haus aus in diesem Bereich schwierig zu handhaben ist. Die Gefahr des Absetzens von Bestandteilen wird durch einen erfindungsgemäß verhältnismäßig hohen Anteil an Stabilisator (ca. 2 %) vermieden. Andererseits ist aber auch eine an sich durch den Stabilisator ausgelöste unerwünschte Verdickung des Getränks (Puddingbildung) vermieden, und zwar durch eine überraschende, Wirkung von Salz, offenbar in Verbindung mit den weiteren Zugaben Saccharose, Dextrose und Lactose. Aufgrund dieser Zusammensetzung wird überraschenderweise erreicht, daß der Stabilisator lediglich ein Absetzen des Kakaopulvers verhindert, hingegen nicht die unerwünschte Nebenwirkung einer Eindickung des Getränks entfaltet. Auf diese Weise ist es erstmals möglich, schwach entöltes Kakaopulver, also Kakaopulver mit verhältnismäßig hohem Fettgehalt in einem relativ hohen Anteil von vorzugsweise 38 g je Liter Getränk einzusetzen. Der Fettanteil des Kakaopulvers beträgt vorzugsweise 20 bis 22 Gew.-%. Des weiteren sind mindestens 32 Gew.-% Kakaopulver im Schokoladepulver enthalten. Ein erfindungsgemäß hergestelltes Schokoladegetränk hat einen Kakaopulveranteil von 41,7 g je Liter. Dieser Anteil liegt beträchtlich über dem Kakaopulveranteil herkömmlicher kakaohaltiger Getränke mit 15 g je Liter.

Zur geschmacklichen Verbesserung bzw. Abrundung können dem erfindungsgemäßen Getränk bzw. dem Gemisch Aromastoffe, insbesondere Caramelaroma zugesetzt werden.

Die Erfindung ermöglicht weiterhin den Einsatz von verhältnismäßig fetthaltiger Milch, insbesondere von Vollmilch. Auch hierdurch wird eine geschmackliche Verbesserung bewirkt. Die sonst bei fetthaltiger Milch beobachteten Nachteile werden überraschenderweise vermieden.

Eine bevorzugte Zusammensetzung der erfindungsgemäßen Trinkschokolade mit Schokoladepulver kann die nachfolgenden Zutaten aufweisen:

| Zutaten | g/l Milch |
|---|---|
| Kakaopulver A | 20,85 |
| Kakaopulver B | 20,85 |
| Saccharose | 62,7 |
| Dextrose | 20 |
| Lactose | 5 |
| Salz | 0,2 |
| Aroma | 0,4 |

In den nachfolgenden Schaubildern wird ein erfindungsgemäß zusammengesetztes Pulver zur Herstellung des Schokoladegetränks einem konventionellen Pulver für kakaohaltige Getränke gegenübergestellt.

Wie sich aus den vorstehenden bildlichen Gegenüberstellungen ergibt, werden die besonderen, überraschenden Eigenschaften des erfindungsgemäßen Pulvers für die Herstellung von Trinkschokolade durch die Zusammensetzung, insbesondere durch die Zugabe von Salz in Verbindung mit Dextrose, Lactose und Saccharose, erreicht. Die so erzielten Vorteile des erfindungsgemäßen Getränks sind neben dem ausgezeichneten Geschmack die günstige Konsistenz (Cremigkeit, kein Bodensatz, kein Schütteln vor Gebrauch). Hiermit in Verbindung steht der verhältnismäßig hohe Materialeinsatz (ca. 130 g/l Milch) und die vergleichsweise hohe Konzentration an Stabilisator (2 Gew.-% bezogen auf das Schokoladepulver). An sich erwartete ungünstige Auswirkungen des hohen Materialeinsatzes und des hohen Stabilisatoranteils werden vermieden.

Hierfür ist weiterhin verantwortlich ein besonderes Herstellungsverfahren für das Schokoladegetränk. Erfindungsgemäß wird zunächst ein Gemisch aus Schokoladepulver - in der oben geschilderten Zusammensetzung -, kalter Milch und Stabilisator hergestellt, wobei der Stabilisator auch dem Schokoladepulver beigefügt sein kann.

Bei der Herstellung des Gemisches aus den Ausgangssubstanzen wird vorzugsweise in einem großen Tank kalte Milch (ca. 10° C) zuerst mit dem Kakao und ca. 9/10 der Saccharose vermischt, danach werden Dextrose und Lactose zugegeben. Die Aromamischung aus Aroma, Salz und dem Rest Saccharose wird zuletzt eingerührt.

Das Gemisch wird dann ca. 10 min. lang durch ein Umflutungssystem umgepumpt. Danach wird der Ansatz ohne weitere Kühlung mindestens 8 h, insbesondere 12 h (also über Nacht) gerührt. Dieses Verfahren wird zweckmäßigerweise in einem Mischer herkömmlicher Art durchgeführt.

Die Zugabe der Ingredenzien und des Stabilisators kann derart vonstatten gehen, daß fertig gemischtes Kakaopulver sowie Stabilisator insgesamt oder chargenweise in die Milch gegeben werden. Es ist aber auch möglich, die Bestandteile des Schokoladepulvers getrennt bzw. teilweise vermischt in die Milch einzuleiten.

Im nachfolgenden Verfahrensschritt wird das so hergestellte flüssige Gemisch erwärmt, und zwar als Vorstufe zum nachfolgenden Ultrahocherhitzen. Die Flüssigkeit wird vorzugsweise durch einen Durchlauferhitzer hindurchgepumpt und dabei auf etwa 80° C erwärmt.

Unmittelbar hieran anschließend, und zwar vorzugsweise als kontinuierliche Fortsetzung des Verfahrens, wird die Flüssigkeit einer UHT-Behandlung unterzogen. Hierbei wird überhitzter, gereinigter (kulinarischer) Dampf während eines Zeitraums von 4 sec bei etwa 146° C in das Gemisch eingeleitet. Danach erfolgt das Homogenisieren bei 80° C. Das Getränk kann sodann auf unter 18° C abgekühlt werden.

Verfahrenstechnisch wird sichergestellt, daß die Wärmeeinwirkung auf das Getränk zu vollständiger Keimfreiheit führt. Aufgrund der gewählten Zeiträume, Temperaturen und der unmittelbar nacheinander erfolgenden Verfahrensschritte der Erwärmung und der UHT-Behandlung wird überraschenderweise erreicht, daß der Stabilisator keine Wirkung in Richtung auf eine Verdickung des Produkts entfaltet, und daß das Produkt trotz der UHT-Erhitzung nicht den üblichen Geschmack von UHT-erhitzter Milch hat.

## Ansprüche

1. Trinkschokolade unter Verwendung von Kakaopulver und Milch, **dadurch gekennzeichnet,** daß sie aus Schokoladepulver, welches im wesentlichen schwach entöltes Kakaopulver, Saccharose, Dextrose, Lactose und Kochsalz enthält, und Milch unter Verwendung von mindestens einem Stabilisator hergestellt ist.

2. Trinkschokolade nach Anspruch 1, dadurch gekennzeichnet, daß das im Schokoladepulver enthaltene Kakaopulver einen Fettanteil von 20 - 22 Gew.-% aufweist.

3. Trinkschokolade nach Anspruch 1 oder 2, dadurch gekennzeichnet, daß sie je Liter mindestens 100 g, vorzugsweise 130 g, Schokoladepulver enthält.

4. Trinkschokolade nach Anspruch 1, dadurch gekennzeichnet, daß das Schokoladepulver zusätzlich Aromastoffe, insbesondere Caramel, enthält.

5. Trinkschokolade nach Anspruch 1 sowie einem oder mehreren der weiteren Ansprüche, gekennzeichnet durch die Verwendung von fetthaltiger Milch, insbesondere von Vollmilch.

6. Trinkschokolade nach Anspruch 1 sowie einem oder mehreren der weiteren Ansprüche, dadurch gekennzeichnet, daß der Stabilisator, vorzugsweise Carrageen, in einer Menge von 2 Gew.-%, bezogen auf das Schokoladepulver, enthalten ist.

7. Trinkschokolade nach Anspruch 1 sowie einem oder mehreren der weiteren Ansprüche, gekennzeichnet durch die Zusammensetzung des Schokoladepulvers wie folgt:
32 - 36, insbesondere 32 Gew.% Kakaopulver (Fettanteil 20 - 22 Gew.%)
40 - 49, insbesondere 48,2 Gew.% Saccharose
12 - 18, insbesondere 15,4 Gew.% Dextrose
3 - 6, insbesondere 3,9 Gew.% Lactose
0,1 - 0,2, insbesondere 0,15 Gew.% Kochsalz
sowie gegebenenfalls
0,31 Gew.% Aromastoffe.

8. Verfahren zur Herstellung von Trinkschokolade, insbesondere nach einem oder mehreren der vorangehenden Ansprüche, gekennzeichnet durch folgende Verfahrensschritte:

a. Herstellen eines Gemisches aus Schokoladepulver, kalter Milch und Stabilisator;
b. Erhitzen des vorstehenden Gemisches;
c. Ultrahocherhitzen des Gemisches;
d. Homogenisieren des Gemisches bei erhöhter Temperatur, insbesondere bei 80° C;
e. Abkühlen auf vorzugsweise unter 18° C.

9. Verfahren nach Anspruch 8, dadurch gekennzeichnet, daß die Herstellung des Gemisches durch Vermengen der Komponenten in einem Mischer über einen Zeitraum von mindestens 8 h, vorzugsweise etwa 12 h, erfolgt.

10. Verfahren nach Anspruch 8 und 9, dadurch gekennzeichnet, daß das Gemisch bis auf eine Temperatur von etwa 80° C erwärmt wird, vorzugsweise durch Pumpen über einen Durchlauferhitzer.

11. Verfahren nach Anspruch 8 sowie einem oder mehreren der weiteren Ansprüche, dadurch gekennzeichnet, daß das Ultrahocherhitzen des Gemisches im Direktverfahren durch Einleiten von (gereinigtem) Dampf in die Flüssigkeit erfolgt, und zwar bei hoher Temperatur von 130° C bis 160° C, insbesondere bei 146° C, und während eines kurzen Zeitraums von weniger als 10 min, insbesondere während einer Dauer von 4 sec.

12. Verfahren nach Anspruch 8, sowie einem oder mehreren der weiteren Ansprüche, dadurch gekennzeichnet, daß die Verfahrensschritte b. (Erhitzen des Gemisches) und c. (Ultrahocherhitzen des Gemisches) in kontinuierlicher Verfahrensweise aufeinanderfolgend ablaufen.

Schaubild 1

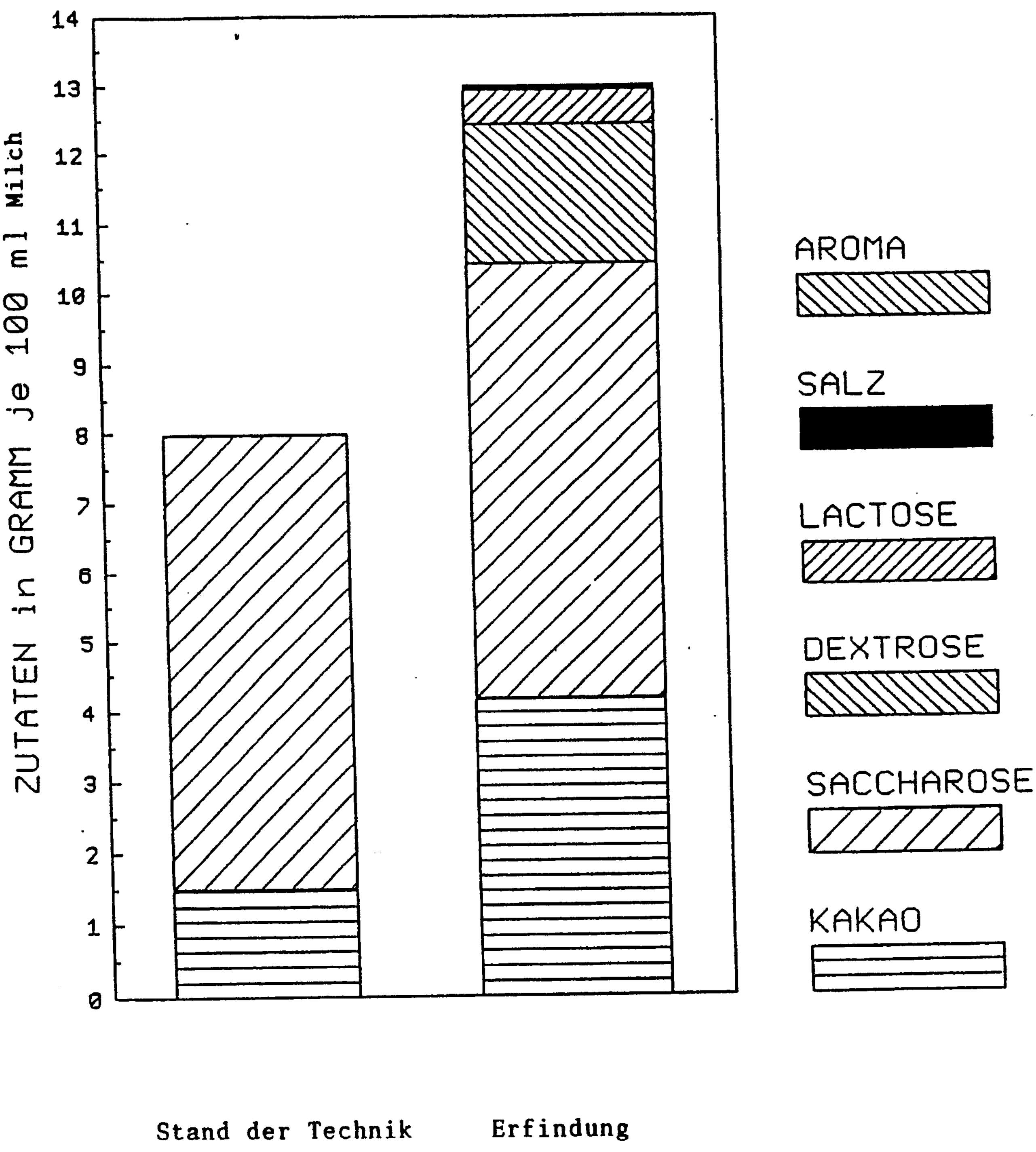
14
13
12
11
10
9
8
7
6
5
4
3
2
1
0
ZUTATEN in GRAMM je 100 ml Milch
AROMA
SALZ
LACTOSE
DEXTROSE
SACCHAROSE
KAKAO
Stand der Technik
Erfindung

Schaubild 2

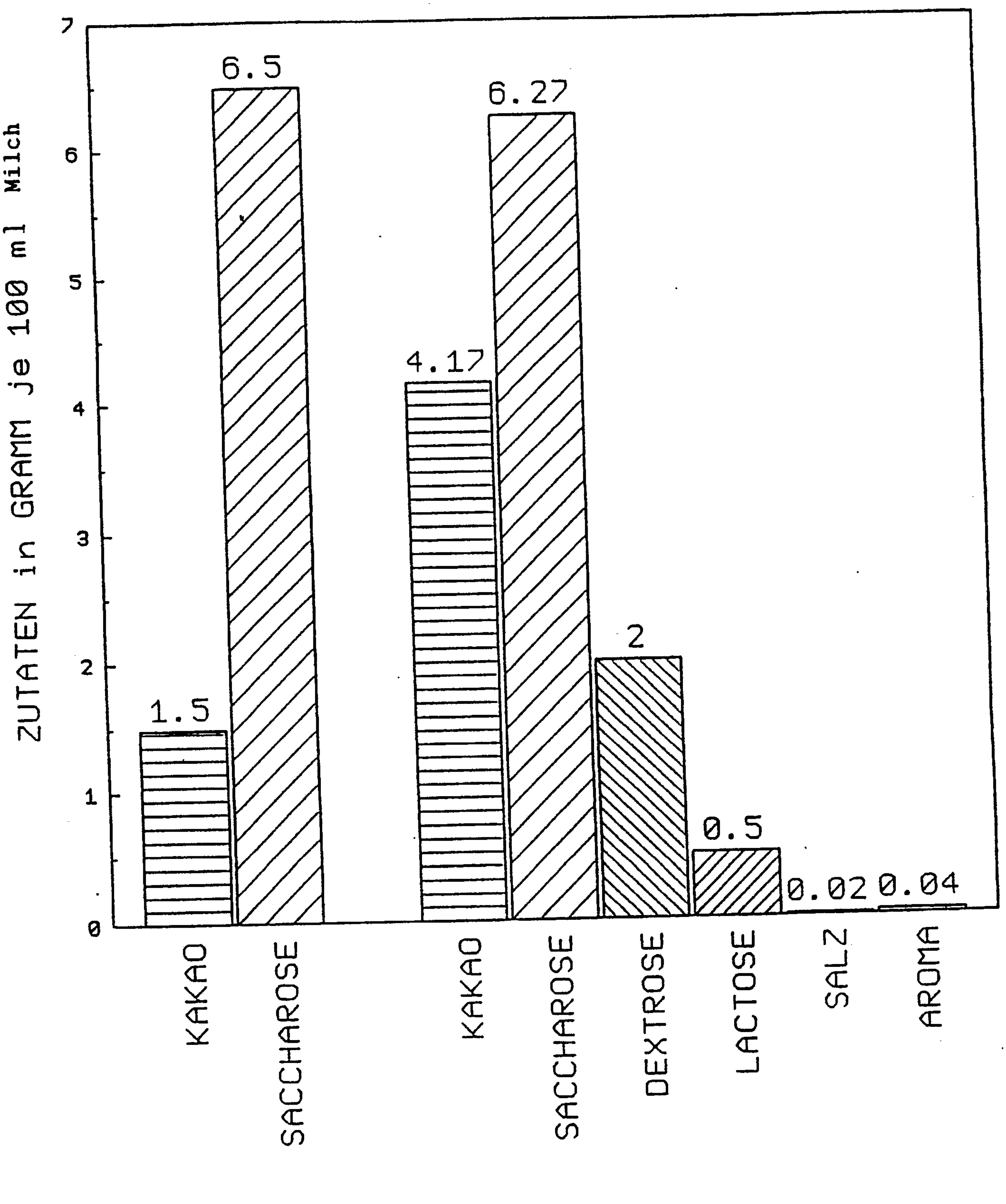


Stand der Technik

Erfindung